# DEMANDE DE BREVET EUROPEEN

(11) **EP 4 316 886 A1**
(43) Date de publication de la demande: **07.02.2024**
(21) Numéro de dépôt: 22188445.5
(22) Date de dépôt: 03.08.2022
(51) Int. Cl.: B60K 15/04, B60K 15/03

(54) **DISPOSITIF ANTI-SIPHONNAGE POUR RÉSERVOIR**

(71) Demandeur: Bat-Isol SA, 1032 Romanel-sur-Lausanne (CH)
(72) Inventeur: Mustafi, Namon, 1608 Oron-le-Châtel (CH)
(74) Mandataire: P&TS SA (AG, Ltd.)

(57) **Abrégé**

La présente invention concerne un dispositif anti-siphonnage pour une ouverture d'entrée d'un réservoir destiné à contenir un liquide moussant lorsqu'il est soumis à des conditions de flux turbulentes, le dispositif comprenant une structure tubulaire creuse permettant l'écoulement d'un fluide entre une première extrémité de la structure tubulaire et une seconde extrémité de la structure tubulaire, caractérisé en ce que la structure tubulaire comprend une pluralité de rainures traversantes disposées sur une portion de la surface latérale de la structure tubulaire s'étendant entre la première et la seconde extrémité, de manière à permettre l'écoulement du fluide vers l'extérieur de la structure tubulaire, et caractérisé en ce que le dispositif comprend un corps d'écoulement fixé à la seconde extrémité et extérieur à la structure tubulaire, en sorte que le liquide qui sort des rainures traversantes coule le long d'une surface latérale externe du corps d'écoulement.

La présente invention concerne également un ensemble comprenant un réservoir destiné à contenir un liquide moussant lorsqu'il est soumis à des conditions de flux turbulentes et le dispositif anti-siphonnage tel que décrit ci-dessus, le dispositif anti-siphonnage étant fixé dans l'ouverture d'entrée du réservoir.

## Description

### Domaine technique

La présente invention concerne un dispositif anti-siphonnage pour réservoir de liquide moussant en conditions de flux turbulentes.

### Etat de la technique

De nombreux réservoirs sont destinés à contenir des liquides dont la valeur peut être relativement importante, notamment en raison de la grande capacité de ces réservoirs. Les réservoirs à carburant des voitures et des camions, de même que les citernes à mazout de particuliers peuvent par exemple contenir plusieurs dizaines de litres de carburant dont le prix fait de ces réservoirs des cibles de choix pour les voleurs. Ce problème est évidemment condamné à s'aggraver avec la hausse inévitable du prix des carburants.

Etant donné que ces réservoirs nécessitent d'être remplis plus ou moins régulièrement, leur sécurisation doit permettre à la fois d'empêcher les personnes mal intentionnées d'accéder à leur contenu, et à la fois de maintenir une certaine facilité d'accès pour leurs utilisateurs afin qu'ils puissent les remplir aisément.

Une grande majorité des vols est opérée par siphonnage du réservoir, c'est-à-dire par l'introduction d'un tuyau à l'intérieur du réservoir, de sorte à aspirer le liquide à l'extérieur. Cette technique est particulièrement dommageable pour les propriétaires/utilisateurs des réservoirs en question car elle ne laisse aucune trace, rendant souvent impossible toute preuve d'une infraction.

Plusieurs types de dispositifs anti-vol et plus précisément anti-siphonnage destinés aux réservoirs de liquide en tous genres sont connus dans l'art antérieur.

Cependant, la nature de certains liquides rend compliquée, voire impossible l'utilisation des dispositifs à cause de leur propension à mousser lorsqu'ils sont soumis à des conditions de flux turbulentes. Le remplissage d'un réservoir équipé d'un dispositif anti-siphonnage nécessitant que le liquide traverse une grille constitue typiquement un exemple de de conditions turbulentes de flux. En effet, le maillage de la grille du dispositif doit être suffisamment fin pour empêcher l'introduction d'un tuyau permettant de siphonner le réservoir, ce qui induit une important perturbation du flux du liquide à l'interface de la grille. Il devient alors complexe, voire impossible de procéder au remplissage car la mousse produite par le liquide en conditions de flux turbulentes ressort du réservoir et peut même provoquer un reflux du liquide lui-même.

Ainsi, certains liquides tels que par exemple le diesel doivent être mélangés à des additifs particuliers afin de rendre possible le remplissage du réservoir muni du dispositif anti-vol.

Il y a donc un besoin pour des dispositifs anti-siphonnage pour réservoir permettant de limiter, voire de supprimer le moussage du liquide lorsqu'il est introduit dans le réservoir dans des conditions de flux turbulentes.

De plus, comme la vaste majorité des réservoirs en circulation n'est pas pourvue de tels dispositifs anti-siphonnage, il est avantageux que ces dispositifs puissent être aisément équipés sans devoir procéder à un démontage complexe, par exemple d'éléments d'un véhicule.

### Bref résumé de l'invention

Un but de la présente invention est de proposer un dispositif anti-siphonnage exempt des limitations des dispositifs connus dans l'art antérieur.

Un autre but de l'invention est de proposer un dispositif anti-siphonnage pour réservoir permettant de limiter, voire de supprimer le moussage du liquide lorsqu'il est introduit dans le réservoir dans des conditions de flux turbulentes.

Un autre but de l'invention est de proposer un dispositif anti-siphonnage pouvant être facilement monté sur des réservoirs existants.

Un autre but de l'invention est de proposer un ensemble comprenant un réservoir et d'un dispositif anti-siphonnage agencé dans une ouverture d'entrée du réservoir.

Selon l'invention, ces buts sont atteints notamment au moyen d'un dispositif anti-siphonnage pour une ouverture d'entrée d'un réservoir destiné à contenir un liquide moussant lorsqu'il est soumis à des conditions de flux turbulentes, le dispositif comprenant une structure tubulaire creuse permettant l'écoulement d'un fluide entre une première extrémité de la structure tubulaire et une seconde extrémité de la structure tubulaire, et étant caractérisé en ce que la structure tubulaire comprend une pluralité de rainures traversantes disposées sur une portion de la surface latérale de la structure tubulaire s'étendant entre la première et la seconde extrémité, de manière à permettre l'écoulement du fluide vers l'extérieur de la structure tubulaire, et étant également caractérisé en ce que le dispositif comprend un corps d'écoulement fixé à la seconde extrémité et extérieur à la structure tubulaire, en sorte que le liquide qui sort des rainures traversantes coule le long d'une surface latérale externe du corps d'écoulement.

La seconde extrémité de la structure tubulaire peut comprendre au moins un trou disposé de manière à permettre l'écoulement du fluide à travers la seconde extrémité vers l'extérieur du dispositif.

Le dispositif anti-siphonnage peut comprendre en outre une grille sur une surface latérale interne de la structure tubulaire, en sorte que la pluralité de rainures traversantes est au moins partiellement superposée à ladite grille.

Le corps d'écoulement peut s'évaser depuis la seconde extrémité de la structure tubulaire dans une direction parallèle à un canal interne de la structure tubulaire.

Une section du corps d'écoulement dans un plan perpendiculaire à une direction d'écoulement du liquide dans la structure tubulaire peut avoir la même forme qu'une section de la structure tubulaire dans un plan perpendiculaire à ladite direction.

Le corps d'écoulement peut comprendre un cône ayant une section circulaire, elliptique, triangulaire, rectangulaire ou polygonale à plus de quatre côtés.

Un diamètre maximal du corps d'écoulement dans un plan perpendiculaire à une direction d'écoulement du liquide dans la structure tubulaire peut être égal à un diamètre de la seconde extrémité de la structure tubulaire.

Chacune des rainures traversantes de la pluralité de rainures traversantes peut être disposée parallèlement à une direction d'écoulement du liquide dans la structure tubulaire.

Le dispositif anti-siphonnage peut comprendre au moins 8 rainures traversantes.

Une largeur de la surface latérale de la structure tubulaire séparant deux rainures traversantes consécutives peut être inférieure à une largeur des rainures traversantes.

Une longueur des rainures traversantes peut être supérieure à la moitié de la longueur de la structure tubulaire dans une direction d'écoulement du liquide dans la structure tubulaire, et de préférence supérieure au deux tiers de la longueur de la structure tubulaire dans une direction d'écoulement du liquide dans la structure tubulaire.

La structure tubulaire peut comprendre des moyens de fixation, pour fixer le dispositif dans l'ouverture d'entrée du réservoir.

Les moyens de fixation peuvent comprendre des moyens de sertissage d'une portion de la structure tubulaire adjacente à la première extrémité à une portion de l'ouverture d'entrée du réservoir.

Selon l'invention, ces buts sont également atteints par un ensemble comprenant un réservoir destiné à contenir un liquide moussant lorsqu'il est soumis à des conditions de flux turbulentes et un dispositif anti-siphonnage tel que décrit précédemment, le dispositif anti-siphonnage étant fixé dans l'ouverture d'entrée du réservoir.

La distance entre une surface latérale interne de l'ouverture d'entrée du réservoir et la portion de la structure tubulaire supportant les rainures est avantageusement inférieure à 10mm.

### Brève description des figures

Des exemples de mise en oeuvre de l'invention sont indiqués dans la description illustrée par les figures annexées dans lesquelles :
- La figure 1 illustre schématiquement une vue latérale d'un dispositif anti-siphonnage.
- La figure 2 illustre schématiquement une vue en perspective d'un dispositif anti-siphonnage.
- La figure 3 illustre une autre vue en perspective d'un dispositif anti-siphonnage.
- La figure 4 illustre schématiquement un dispositif anti-siphonnage monté dans l'ouverture d'entrée d'un réservoir.

### Exemple(s) de mode de réalisation de l'invention

La présente invention concerne un dispositif anti-siphonnage pour une ouverture d'entrée d'un réservoir destiné à contenir un liquide moussant lorsqu'il est soumis à des conditions de flux turbulentes. Ce dispositif vise à la fois à empêcher le siphonnage du réservoir sur lequel il est installé et à limiter, voire supprimer le moussage du liquide lorsque celui-ci est introduit dans le réservoir via le dispositif anti-siphonnage.

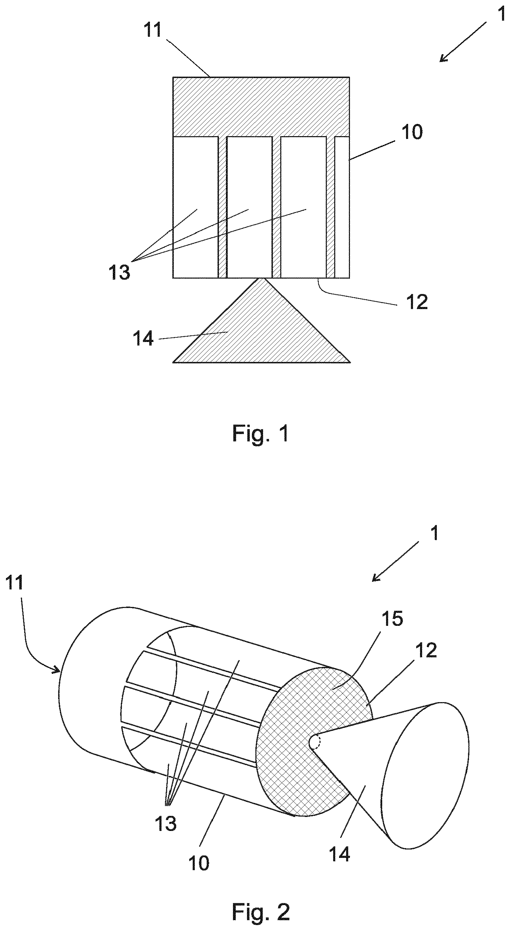

Comme illustré sur la figure 1, le dispositif comporte une structure tubulaire 10 creuse s'étendant entre une première extrémité 11 et une seconde extrémité 12. La première extrémité 11 est aménagée de sorte à pouvoir accueillir un dispositif de remplissage du réservoir, tel qu'un pistolet de pompe à carburant ou plus généralement tel qu'un tuyau ou l'extrémité d'un entonnoir. La partie interne de la structure tubulaire 10 définit un canal dans lequel le liquide peut s'écouler entre la première 11 et la seconde extrémité 12.

Dans le contexte de la présente invention, le terme de longueur de la structure tubulaire a trait à la dimension de la structure tubulaire 10 mesurée entre la première 11 est la seconde extrémité 12, à l'intérieur de la structure tubulaire.

Comme illustré sur la Fig. 2, la structure tubulaire 10 peut s'étendre selon un axe longitudinal correspondant à la direction d'écoulement du liquide dans la structure tubulaire. La première et la seconde extrémité 11,12 peuvent alors être disposées dans un plan transverse à cet axe longitudinal, ce plan transverse étant non parallèle à l'axe longitudinal. Alternativement, la structure tubulaire 10 ne s'étend pas selon un axe rectiligne, mais possède au moins une section courbe de sorte à former au moins un coude.

La section de la structure tubulaire 10 peut être circulaire, elliptique, triangulaire, carrée, polygonale à au moins quatre côtés ou de toute autre forme géométrique adaptée à l'ouverture d'entrée d'un réservoir. Cette section peut être constante sur la longueur de la structure tubulaire. Alternativement, cette section peut être variable sur la longueur de la structure tubulaire.

La longueur de la structure tubulaire 10 peut varier en fonction du type de réservoir sur lequel le dispositif est destiné à être installé. De manière générale, la longueur doit être d'une part suffisamment importante pour accueillir le dispositif de remplissage du réservoir et d'autre part suffisamment petite pour minimiser la quantité de liquide présente dans la structure tubulaire une fois que le réservoir est rempli car le liquide présent dans la structure tubulaire peut être siphonné. Ainsi, plus la longueur est importante, plus la quantité de liquide pouvant être siphonné est grande. Une longueur minimale est donc avantageuse à cet égard, sans constituer une restriction à la portée de la présente invention.

Dans un mode de réalisation, la longueur de la structure tubulaire 10 est adaptée à la longueur de l'embout d'un pistolet de pompe à carburant standard. Dans ce cas, la longueur de la structure tubulaire 10 est comprise entre 100mm et 150mm. L'adaptation de la longueur de la structure tubulaire à la longueur de l'embout du pistolet permet ainsi de minimiser la quantité de liquide se trouvant dans le dispositif anti-siphonnage lorsque le réservoir est complètement rempli, de sorte à limiter la quantité de liquide pouvant être siphonné de l'intérieur du dispositif lorsque le réservoir est plein.

Afin que le liquide s'écoulant dans la structure tubulaire 10 puisse en ressortir et s'écouler dans le réservoir, une portion de la surface latérale s'étendant entre la première 11 et la seconde extrémité 12 de la structure tubulaire est pourvue d'une pluralité de rainures traversantes 13. Ces rainures traversantes permettent au liquide introduit dans la structure tubulaire d'en ressortir pour remplir le réservoir.

Comme illustré sur la Fig. 2, les rainures traversantes 13 peuvent s'étendre sur une portion de la structure tubulaire 10 adjacente à la seconde extrémité 12. La structure tubulaire 10 peut comprendre une portion dépourvue de rainures traversantes. Cette portion dépourvue de rainures peut être avantageusement adjacente à la première extrémité 11 en sorte de faciliter la fixation du dispositif au réservoir au niveau de cette portion.

Dans un mode de réalisation illustré sur la Fig. 2, la portion de la structure tubulaire sur laquelle s'étendent les rainures traversantes est supérieure à la moitié de la longueur de la structure tubulaire. De manière préférentielle, cette portion s'étend sur au moins les deux tiers de cette longueur.

Les dimensions des rainures traversantes 13 sont adaptées pour éviter des conditions de flux turbulentes lorsque le liquide s'écoule à travers. Ces dimensions sont en particulier adaptées au diamètre du dispositif 1, à sa longueur, et peuvent aussi prendre en compte des paramètres tels que le type de liquide, et donc sa propension à mousser, ainsi que le type de moyen utilisé pour remplir le réservoir. De manière générale, la maximisation du débit à travers le dispositif peut aussi être prise en compte lors du dimensionnement des rainures traversantes afin de réduire le temps de remplissage du réservoir.

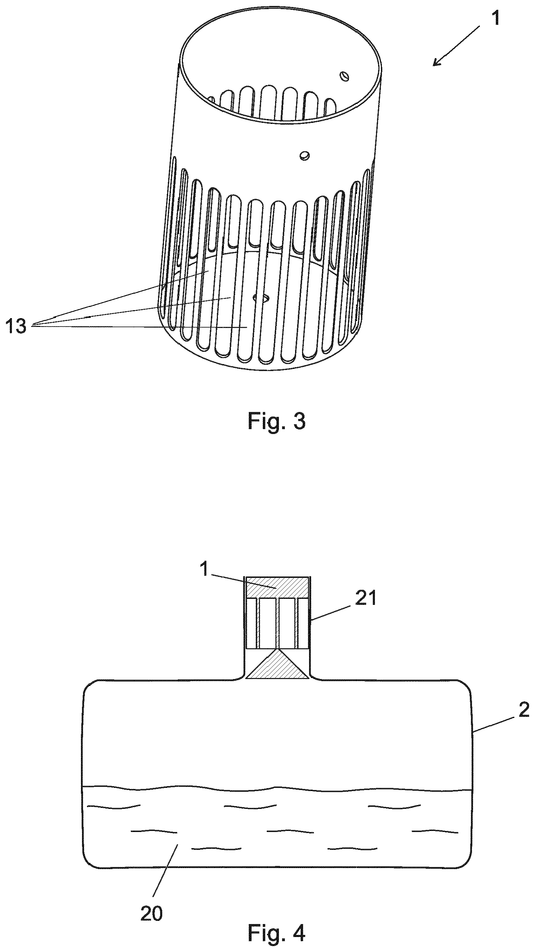

Dans un mode de réalisation préférentiel illustré sur la Fig. 3, les rainures traversantes 13 sont oblongues. Elles peuvent être disposées parallèlement à la direction de la structure tubulaire 10, c'est-à-dire que la plus grande dimension de chaque rainure est mesurée parallèlement à la direction de la structure tubulaire. En particulier, si la structure tubulaire s'étend selon un axe longitudinal correspondant à la direction d'écoulement du liquide, les rainures traversantes s'étendent préférentiellement dans la direction de cet axe longitudinal.

Le nombre de rainures traversantes 13 disposées le long de la structure tubulaire 10 peut varier en fonction de plusieurs paramètres, par exemple en fonction de leurs dimensions, du type de réservoir auquel le dispositif est destiné.

Dans un mode de réalisation, la structure tubulaire 10 comprend au moins quatre rainures traversantes, de façon préférentielle, au moins huit rainures traversantes.

Afin de maximiser le débit de liquide à travers les rainures traversantes 13, la largeur de chaque rainure peut être supérieure à la largeur de la portion de la structure tubulaire 10 séparant deux rainures. Comme illustré sur la fig. 1, la largeur des rainures peut être sensiblement plus large que la largeur des portions de la structure tubulaire espaçant les rainures.

Le diamètre de la structure tubulaire 10 est adapté au type de réservoir sur lequel le dispositif est destiné à être équipé. Typiquement les réservoirs à carburant possèdent une ouverture d'entrée d'un diamètre d'au moins 36 mm, ainsi le diamètre de la structure tubulaire 10 est préférentiellement supérieur à 35 mm.

La minimisation de la distance entre la surface interne de l'ouverture d'entrée du réservoir et la surface latérale externe du dispositif 1 permet en particulier d'éviter le siphonnage du réservoir par l'insertion d'un tuyau dans l'une des rainures traversantes 13. En effet, si l'espace ménagé entre le dispositif et le réservoir au niveau des rainures traversantes est trop important, l'insertion d'un tuyau ayant un diamètre suffisant est rendue possible et le dispositif ne permet plus d'empêcher le siphonnage.

Comme illustré sur la figure 1, le dispositif 1 comprend un corps d'écoulement 14 fixé à la seconde extrémité 12 et extérieur à la structure tubulaire 10. La fonction de ce corps d'écoulement est de limiter, voire de supprimer le moussage du liquide lorsque celui-ci s'écoule de la structure tubulaire vers l'intérieur du réservoir. Le corps d'écoulement 14 permet de stabiliser le flux du liquide à sa sortie de la structure tubulaire. Le liquide s'écoulant de la structure tubulaire 10 par les rainures traversantes 13 et/ou par la seconde extrémité 12 coule sous l'effet de la gravité sur une surface externe du corps d'écoulement 14, puis dans le réservoir.

Le corps d'écoulement 14 est fixé à la seconde extrémité 12 par collage, soudage, braisage, vissage ou tout autre moyen jugé pertinent pas la personne du métier. La zone de fixation du corps d'écoulement à la seconde extrémité peut être située sur une partie latérale de la seconde extrémité 12 de la structure tubulaire 10 et/ou sur une surface externe de la second extrémité 12.

De nombreuses géométries du corps d'écoulement 14 peuvent être envisagées par la personne du métier sans sortir du cadre de la présente invention. En particulier, le corps d'écoulement 14 peut être par exemple sphérique, conique ou polyédrique, de section monotone ou non monotone.

Dans un mode de réalisation, le corps d'écoulement 14 peut avoir une forme s'évasant depuis la seconde extrémité 12 dans une direction perpendiculaire à un canal interne de la structure tubulaire 10.

Dans un mode de réalisation préférentiel, le corps d'écoulement 14 comprend un cône ayant une section circulaire, elliptique, triangulaire, rectangulaire ou polygonale à plus de quatre côtés. Le cône est fixé à son extrémité la plus étroite à la seconde extrémité 12 de la structure tubulaire 10.

Dans un mode de réalisation préférentiel, le plus grand diamètre du corps d'écoulement 14 est sensiblement égal au diamètre de la seconde extrémité 12 de la structure tubulaire en sorte que la quantité de liquide s'écoulant de la structure tubulaire 10 sur le corps d'écoulement 14 soit maximale.

La seconde extrémité 12 peut comprendre au moins un trou de sorte à ce que le liquide à l'intérieur de la structure tubulaire 10 puisse également en sortir par cette extrémité.

Dans un mode de réalisation, la seconde extrémité 12 comporte un seul trou. Ce trou peut représenter un portion signification de la section de la seconde extrémité, par exemple plus de 80%, en sorte de maximiser la quantité de liquide pouvant s'écouler par ce trou.

Dans un mode de réalisation alternatif, la seconde extrémité 12 comporte une pluralité de trous. Ces trous peuvent être de diamètre fixe ou variable et de section diverses.

Dans un mode de réalisation illustré sur la figure 2, ces trous peuvent être formés par une grille 15 disposée transversalement à la structure tubulaire 10 au niveau de la seconde extrémité 12.

Afin de limiter davantage les possibilités de siphonnage par introduction d'un tuyau à l'intérieur du dispositif anti-siphonnage, une surface latérale interne de la structure tubulaire 10 peut être pourvue d'une grille se superposant aux rainures traversantes 13. Une telle grille est par exemple utile lorsque les dimensions des rainures traversantes permettent l'introduction d'un tuyau d'un diamètre suffisant pour rendre possible un siphonnage.

Dans un mode de réalisation particulier, une telle grille s'étend également sur une portion de la seconde extrémité 12 en sorte que les trous décrits plus haut sont formés par les maille de cette grille.

Le dispositif anti-siphonnage de la présente invention peut également comprendre des moyens de fixation à un réservoir auquel il est destiné. Ces moyens de fixations doivent typiquement rendre la plus compliquée possible l'extraction du dispositif lorsqu'il est monté dans un réservoir.

Dans un mode de réalisation préférentiel, ces moyens de fixations comprennent des moyens de sertissage d'une portion de la structure tubulaire 10 adjacente à la première extrémité 11 à une portion de l'ouverture d'entrée du réservoir.

Dans un mode de réalisation le dispositif anti-siphonnage 1 est adapté pour des réservoirs de carburant, typiquement des réservoirs dont le diamètre est compris entre 36 mm et 40 mm. La structure tubulaire 10 possède un diamètre compris 35 mm et 39 mm entre comporte quinze rainures traversantes 13. La largeur des rainures traversantes est comprise entre 6 mm et 8 mm, et la largeur des portions latérales de la structure tubulaire séparant les rainures est comprise entre 1,8 mm et 2,2 mm. La seconde extrémité 12 de la structure tubulaire comprend une pluralité de trous sous la forme d'une grille 15. Le corps d'écoulement 14 est conique et est fixé sur la surface extérieure de la grille.

Toutes les dimensions mentionnées ne constituent pas des limitations de la présente invention et peuvent être adaptées et modifiées selon les besoins particuliers. A titre d'exemple alternatif, le dispositif anti-siphonnage 1 peut être installé sur des réservoirs de carburants dont le diamètre est supérieur à 40mm. En effet, de nombreux poids-lourds, véhicules de chantier, citernes industrielles, etc. possède des réservoirs dont le diamètre est de l'ordre de 80mm, 100mm ou encore plus important.

La présente invention concerne également un ensemble constitué d'un réservoir 2 à liquide 20 moussant lorsqu'il est soumis à des conditions de flux turbulentes et d'un dispositif anti-siphonnage 1 tel que décrit plus haut.

Comme illustré sur la figure 4, le dispositif anti-siphonnage 1 est disposé dans une ouverture d'entrée 21 du réservoir 2.

Le dispositif anti-siphonnage 1 est fixé au réservoir 2 de manière à rendre difficile son extraction sans outil adéquat en sorte qu'une personne souhaitant siphonner le réservoir ne puisse pas l'enlever sans endommager le réservoir. L'installation du dispositif anti-siphonnage peut être effectuée sur des réservoirs 2 existants aussi bien sur des réservoirs au moment de leur fabrication.

Le réservoir 2 est typiquement un réservoir carburant de véhicule ou d'engin à moteur tel que scooter, motocycle, voiture de tourisme, SUV, 4x4, camionnette, camion, générateur, véhicules/machines de chantier et/ou véhicules/machines agricoles. Le réservoir 2 peut également être une citerne de privé, une citerne de chantier/agricole/industrielle.

Le dispositif anti-siphonage 1 peut par exemple être serti sur une surface latérale interne de l'ouverture d'entrée 21 du réservoir 2. Le sertissage peut être effectué grâce à une clé dédiée par un opérateur formé.

Afin de limiter les possibilités de siphonnage par l'introduction d'un tuyau dans le réservoir 2 à travers les rainures traversantes 13, la distance entre la surface latérale externe du dispositif anti-siphonnage 1 et la surface latérale interne de l'ouverture d'entrée 21 du réservoir 2 est avantageusement inférieure à 10mm.

### Numéros de référence employés sur les figures

- 1: Dispositif anti-siphonnage
- 10: Structure tubulaire
- 11: Première extrémité
- 12: Seconde extrémité
- 13: Rainure traversante
- 14: Corps d'écoulement
- 15: Grille
- 2: Réservoir
- 20: Liquide
- 21: Ouverture d'entrée du réservoir

## Revendications

1. Dispositif anti-siphonnage (1) pour une ouverture d'entrée (21) d'un réservoir destiné à contenir un liquide moussant lorsqu'il est soumis à des conditions de flux turbulentes, le dispositif (1) comprenant une structure tubulaire (10) creuse permettant l'écoulement d'un fluide entre une première extrémité (11) de la structure tubulaire et une seconde extrémité (12) de la structure tubulaire,
**caractérisé en ce que** la structure tubulaire (10) comprend une pluralité de rainures traversantes (13) disposées sur une portion de la surface latérale de la structure tubulaire s'étendant entre la première et la seconde extrémité, de manière à permettre l'écoulement du fluide vers l'extérieur de la structure tubulaire,
**et caractérisé en ce que** le dispositif comprend un corps d'écoulement (14) fixé à la seconde extrémité (12) et extérieur à la structure tubulaire (10), en sorte que le liquide qui sort des rainures traversantes coule le long d'une surface latérale externe du corps d'écoulement.

2. Dispositif anti-siphonnage (1) selon la revendication 1, **caractérisé en ce que** la seconde extrémité (12) comprend au moins un trou disposé de manière à permettre l'écoulement du fluide à travers la seconde extrémité (12).

3. Dispositif anti-siphonnage (1) selon l'une des revendications précédentes, **caractérisé en ce qu'il** comprend en outre une grille 15 sur une surface latérale interne de la structure tubulaire (10), en sorte que la pluralité de rainures traversantes (13) est au moins partiellement superposée à ladite grille.

4. Dispositif anti-siphonnage (1) selon l'une des revendications précédentes, **caractérisé en ce que** le corps d'écoulement s'évase depuis la seconde extrémité (12) de la structure tubulaire (10) dans une direction parallèle à un canal interne de la structure tubulaire.

5. Dispositif anti-siphonnage (1) selon l'une des revendications précédentes, **caractérisé en ce qu'**une section du corps d'écoulement (14) dans un plan perpendiculaire à une direction d'écoulement du liquide dans la structure tubulaire est de même forme qu'une section de la structure tubulaire (10) dans un plan perpendiculaire à ladite direction.

6. Dispositif anti-siphonnage (1) selon l'une des revendications précédentes, **caractérisé en ce que** le corps d'écoulement (14) comprend un cône ayant une section circulaire, elliptique, triangulaire, rectangulaire ou polygonale à plus de quatre côtés.

7. Dispositif anti-siphonnage (1) selon l'une des revendications précédentes, **caractérisé en ce qu'un** diamètre maximal du corps d'écoulement (14) dans un plan perpendiculaire à une direction d'écoulement du liquide dans la structure tubulaire (10) est égal à un diamètre de la seconde extrémité (12) de la structure tubulaire.

8. Dispositif anti-siphonnage selon l'une des revendications précédentes, **caractérisé en ce que** les rainures traversantes de la pluralité de rainures traversantes sont disposées parallèlement à une direction d'écoulement du liquide dans la structure tubulaire (10).

9. Dispositif anti-siphonnage selon l'une des revendications précédentes, **caractérisé en ce que** la pluralité de rainures traversantes (13) comprend au moins 8 rainures traversantes.

10. Dispositif anti-siphonnage selon l'une des revendications précédentes, **caractérisé en ce qu'une** largeur de la surface latérale de la structure tubulaire (10) séparant deux rainures traversantes consécutives est inférieure à une largeur des rainures traversantes (13).

11. Dispositif anti-siphonnage selon l'une des revendications précédentes, **caractérisé en ce qu'une** longueur des rainures traversantes (13) est supérieure à la moitié de la longueur de la structure tubulaire (10) dans une direction d'écoulement du liquide dans la structure tubulaire, et de préférence supérieure au deux tiers de la longueur de la structure tubulaire dans une direction d'écoulement du liquide dans la structure tubulaire.

12. Dispositif anti-siphonnage selon l'une des revendications précédentes, **caractérisé en ce que** la structure tubulaire (10) comprend des moyens de fixation, pour fixer le dispositif dans l'ouverture d'entrée du réservoir.

13. Dispositif anti-siphonnage selon la revendication précédente, **caractérisé en ce que** les moyens de fixation comprennent des moyens de sertissage d'une portion de la structure tubulaire adjacente à la première extrémité à une portion de l'ouverture d'entrée du réservoir.

14. Ensemble **caractérisé en ce qu'il** comprend
un réservoir (2) destiné à contenir un liquide (20) moussant lorsqu'il est soumis à des conditions de flux turbulentes et
le dispositif anti-siphonnage (1) selon l'une des revendications 1 à 13, le dispositif anti-siphonnage étant fixé dans une ouverture d'entrée (21) du réservoir (2).

15. Ensemble selon la revendication précédente, **caractérisé en ce que** la distance entre une surface latérale interne de l'ouverture d'entrée (21) du réservoir (2) et la portion de la structure tubulaire (10) supportant les rainures traversantes (13) est inférieure à 10mm.
